# FASCICULE DE BREVET EUROPEEN

(11) **EP 0 985 111 B1**
(45) Date de publication et mention de la délivrance du brevet: **18.08.2004**
(21) Numéro de dépôt: 98901448.5
(22) Date de dépôt: 16.02.1998
(51) Int. Cl.: F16K 11/078

(54) **MECANISME MITIGEUR POUR ARMATURE SANITAIRE**
MISCHMECHANISMUS FÜR EINE SANITÄRARMATUR
MIXING VALVE MECHANISM FOR PLUMBING FIXTURE

(30) Priorité: 06.06.1997 CH 137897
(43) Date de publication de la demande: 15.03.2000
(73) Titulaire: SIMILOR S.A., CH-1227 Carouge-Genève (CH)
(72) Inventeur: RODRIGUEZ, Jean-Jacques, F-74140 Douvaine (FR)
(74) Mandataire: Micheli & Cie
(86) Numéro de dépôt international: PCT/IB1998/000183
(87) Numéro de publication internationale: WO 1998/055786

(56) Documents cités:
- EP-A- 0 450 697
- EP-A- 0 738 848
- WO-A-88/10386
- WO-A-97/45662
- US-A- 3 965 936

## Description

La présente invention se rapporte aux mécanismes mitigeurs pour armatures sanitaires c'est-à-dire des mécanismes généralement à plaquettes céramiques, permettant à l'aide d'un seul levier de commande de contrôler le débit et la température de l'eau de sortie alors que l'alimentation du mécanisme se fait par une canalisation d'eau froide et une canalisation d'eau chaude.

Ces mécanismes sont destinés à être logés dans le corps d'une armature sanitaire, les canaux d'entrée et de sortie d'eau disposés sur la face inférieure du mécanisme étant connectés de façon étanche aux canalisations d'arrivée et de sortie d'eau par simple application à force contre celles-ci par l'intermédiaire d'un joint d'étanchéité.

Les mécanismes ou cartouches de ce type actuellement existantes comportent un boîtier renfermant deux plaquettes céramiques, l'une fixe et l'autre mobile en rotation et en translation. Le boîtier renferme encore un entraîneur solidaire de la plaquette mobile et coulissant linéairement dans un guide pivoté dans la partie supérieure du boîtier, guide sur lequel est articulé le levier de commande dont l'extrémité inférieure coopère avec l'entraîneur pour l'entraîner dans ses mouvements de rotation et de translation.

Le col ou partie haute du boîtier traversée par le levier de commande, est de plus petit diamètre que sa partie inférieure qui est elle obturée par un fond servant de support à un joint d'étanchéité.

La demande de brevet européen EP 0738848 décrit un tel mécanisme mitigeur pour armature sanitaire qui comporte un boîtier cylindrique constitué de deux parties. La partie inférieure du boîtier comprend les passages d'eau et assure la fonction dudit fond afin de garantir l'étanchéité du mécanisme. La partie supérieure du boîtier est ouverte aux deux extrémités, et la paroi intérieure de cette partie présente vers son extrémité ouverte de plus grand diamètre des éléments agencés de manière à ce que ledit fond constitué par la partie inférieure du boîtier peut être fixé par encliquetage à la partie supérieure du boîtier.

Le brevet US 3965936 décrit également un mécanisme mitigeur pour armature sanitaire qui est équipé d'une plaquette céramique fixe montée entre une plaquette céramique mobile et une pièce assurant le fond du mécanisme. Cette plaquette céramique fixe présente cinq passages dont deux pour le montage du mécanisme et héberge à l'intérieur de chacun des trois passages d'eau intégrés dans cette plaquette céramique fixe un joint distinct afin d'assurer l'étanchéité.

Ces mécanismes ou cartouches existantes présentent certains inconvénients dont les principaux sont les suivants :
- pour pouvoir être placés dans les corps des armatures sanitaires modernes de faible hauteur l'épaisseur des plaquettes céramiques doit être faible ce qui rend leur fabrication difficile et leur confère une grande fragilité.
- la liaison entre le levier et l'entraîneur est souvent fragile de sorte que l'on est conduit à renforcer les leviers (par exemple en métal) pour leur conférer la résistance nécessaire ce qui est onéreux et impose des limitations à l'aspect esthétique du levier.
- Lorsqu'elles en comportent ces butées nécessitent un réglage au montage du mécanisme dans l'armature. De plus ces butées ne sont pas outrepassables c'est-à-dire qu'elles limitent définitivement le débit ou la température à une valeur donnée et que même si l'usager veut augmenter le débit ou la température cela lui est impossible.

La présente invention se propose la réalisation d'un mécanisme ou cartouche du type précédemment décrit qui obvie aux inconvénients des mécanismes actuels. De plus, l'invention a pour but de réaliser un mécanisme moins cher, présentant moins de pièces, permettant dans un même encombrement de prévoir des plaquettes céramiques plus épaisses et qui soit équipé de butées outrepassables de température et/ou de débit qui soient amovibles.

Le mécanisme mitigeur pour armature sanitaire selon l'invention se distingue par les caractéristiques énumérées à la revendication 1.

Le dessin annexé illustre schématiquement et à titre d'exemple une forme d'exécution du mécanisme selon l'invention.

La figure 1 est une élévation en coupe du mécanisme.

La figure 2 est une vue de dessus du mécanisme.

La figure 3 est une vue de dessous du mécanisme.

La figure 4 est une vue de la face inférieure de la plaquette fixe du mécanisme.

La figure 5 est une vue de la face supérieure de la plaquette fixe du mécanisme.

La figure 6 est une coupe de la plaquette fixe du mécanisme suivant la ligne I-I de la figure 4.

La figure 6a est une coupe de la plaquette fixe du mécanisme suivant la ligne I-Ia de la figure 4.

La figure 7 est une vue de la face supérieure de la plaquette mobile du mécanisme.

La figure 8 est une vue de la face inférieure de la plaquette mobile du mécanisme.

La figure 9 est une vue en coupe de la plaquette mobile suivant la ligne II-II de la figure 7.

La figure 10 est une vue en plan de l'entraîneur du mécanisme.

La figure 11 est une vue en coupe de l'entraîneur suivant la ligne III-III de la figure 10.

La figure 12 est une vue en plan du joint du mécanisme.

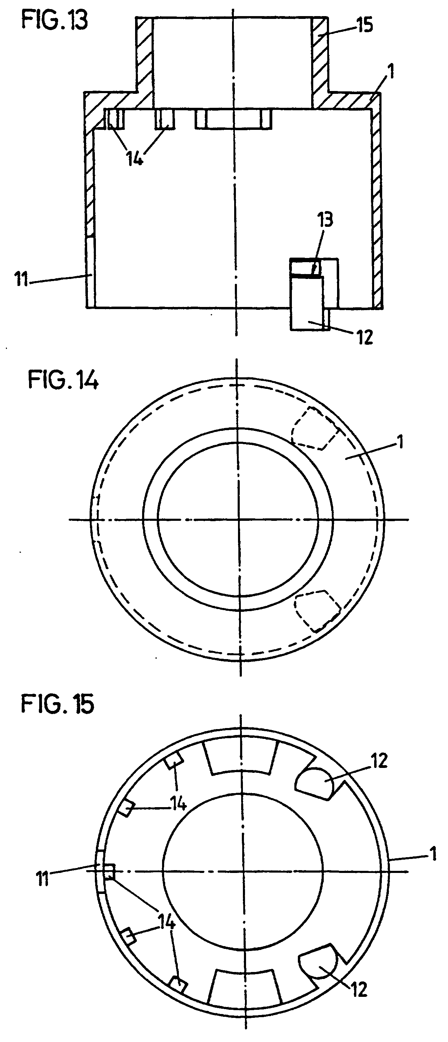

La figure 13 est une vue en coupe axiale du boîtier du mécanisme.

La figure 14 est une vue de dessus du boîtier du mécanisme.

La figure 15 est une vue de dessous du boîtier du mécanisme.

Les figures 16, 18 et 19 illustrent le levier de commande monté sur le guide du mécanisme dans trois positions relatives différentes.

La figure 17 est une vue de dessus du guide et du levier assemblés dans leur position relative illustrée à la figure 16.

La figure 20 est une vue de côté du levier du mécanisme.

La figure 21 est une vue en plan de l'extrémité inférieure du levier.

La figure 22 est une vue en plan du guide d'une variante du mécanisme

La figure 23 est une vue en plan du guide d'une seconde variante du mécanisme.

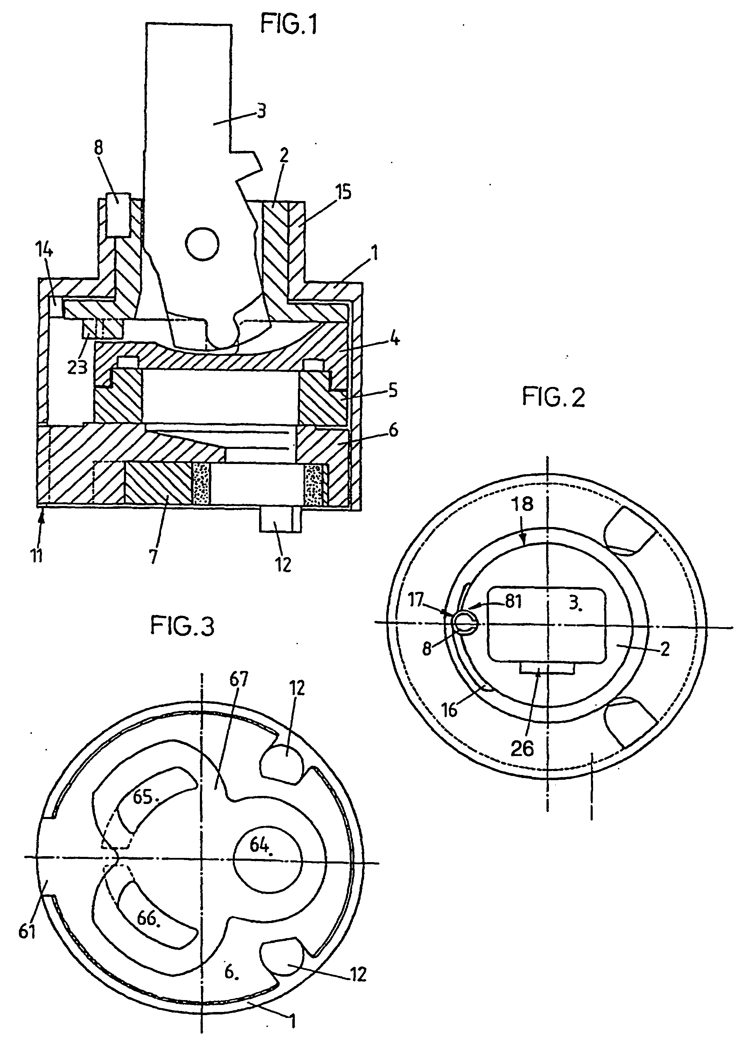

En référence aux figures 1 à 3 où l'on voit le mécanisme monté, celui-ci comporte un boîtier 1 dans lequel est logé, de haut en bas, un guide 2 sur lequel est pivoté un levier de commande 3. L'extrémité inférieure de ce levier de commande est en prise avec une formation d'accouplement que présente la face supérieure d'un entraîneur 4 coulissant linéairement par rapport au guide 2. Cet entraîneur 4 est solidaire angulairement et linéairement d'une plaquette mobile supérieure 5 dont la face inférieure glisse sans jeu et de façon étanche sur la face supérieure d'une plaquette fixe inférieure 6. Cette plaquette fixe 6 est angulairement solidaire du boîtier 1 et encliquetée axialement sur celui-ci et constitue ainsi elle-même le fond ou face inférieure du mécanisme. Enfin, un joint d'étanchéité 7 est logé directement dans un logement pratiqué dans la face inférieure libre de la plaquette fixe.

Par cette conception de la plaquette fixe 6 encliquetée axialement sur le boîtier 1 on voit déjà que par rapport aux mécanismes existants et donc pour un même encombrement en hauteur, les plaquettes 5 et 6 et notamment cette dernière qui présente des ouvertures de forme compliquée, peuvent être plus épaisses, du fait de l'absence de fond du boîtier, ce qui rend possible d'y pratiquer un logement débouchant sur sa face libre recevant le joint d'étanchéité 7.

Ce mécanisme comporte encore une butée surpassable et amovible de température 8 et une butée surpassable et amovible de débit 9.

La description qui va suivre fera encore ressortir d'autres caractéristiques de ce mécanisme qui permettent d'atteindre les buts fixés plus haut à savoir diminution du prix et de nombre de pièces constitutives, robustesse, flexibilité d'usage et de fonction.

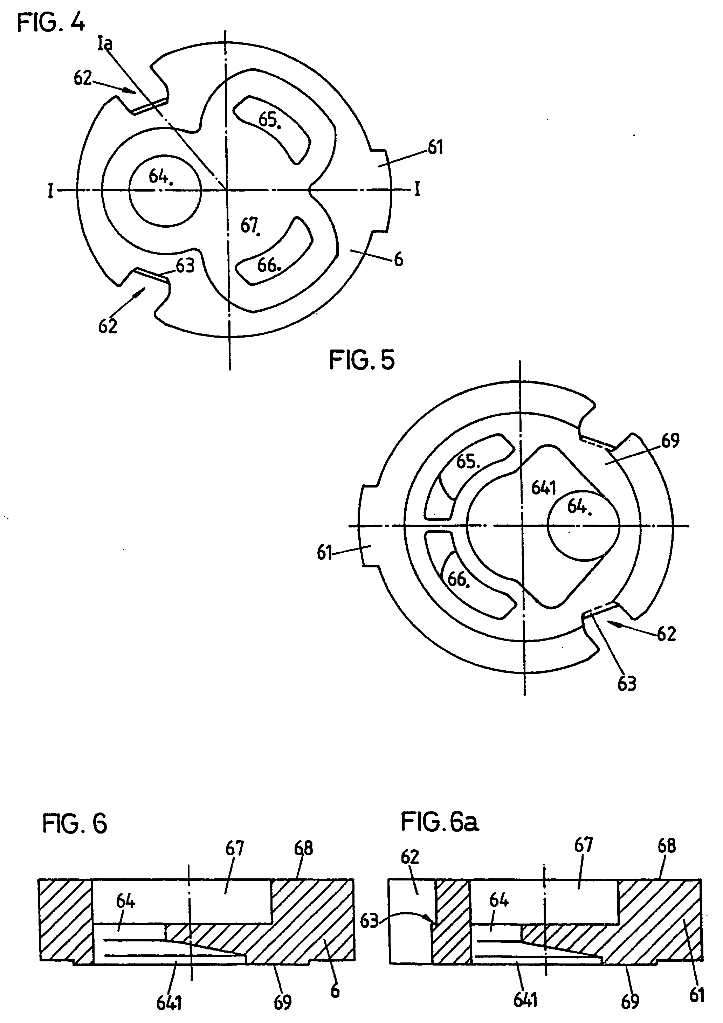

La plaquette fixe inférieure 6 est illustrée en détail aux figures 4 à 6. Cette plaquette 6 en céramique comporte à sa périphérie une saillie 61 destinée à coopérer avec une entaille 11 de la paroi du boîtier 1. La périphérie de cette plaquette 6 comporte encore deux entailles 62 munies d'un épaulement 63 destinées à donner passage à deux pieds 12 du boîtier 1. Ces épaulements 63 coopèrent avec un épaulement correspondant 13 des pieds 12 servant à l'encliquetage de la plaquette fixe 6 sur le boîtier 1. La saillie 61 et les entailles 62 fixent ainsi la position angulaire et axiale de la plaquette 6 sur le boîtier 1 en position de service, de plus ces formations évitent toute erreur de montage de la plaquette 6 dans le boîtier 1.

Cette plaquette 6 comporte un orifice d'évacuation de l'eau mélangée 64 et deux fentes d'arrivée 65 et 66 de l'eau froide et de l'eau chaude respectivement. Ces trois ouvertures 64,65,66 débouchent toutes dans la face d'un logement 67 pratiqué dans la face inférieure 68 de cette plaquette 6. Les fentes d'arrivée d'eau 65,66 vont en s'évasant et débouchent sur la face supérieure 69 de cette plaquette fixe 6. Les arrêtes des fentes 65,66 avec les faces supérieure et inférieure de la plaquette fixe sont vives ce qui, compte tenu de la forte épaisseur de cette plaquette, contribue à diminuer la cavitation du flux d'eau et donc le bruit. L'orifice 64 d'évacuation d'eau s'évase dans une creusure 641 débouchant sur la face supérieure 69 de la plaquette 6.

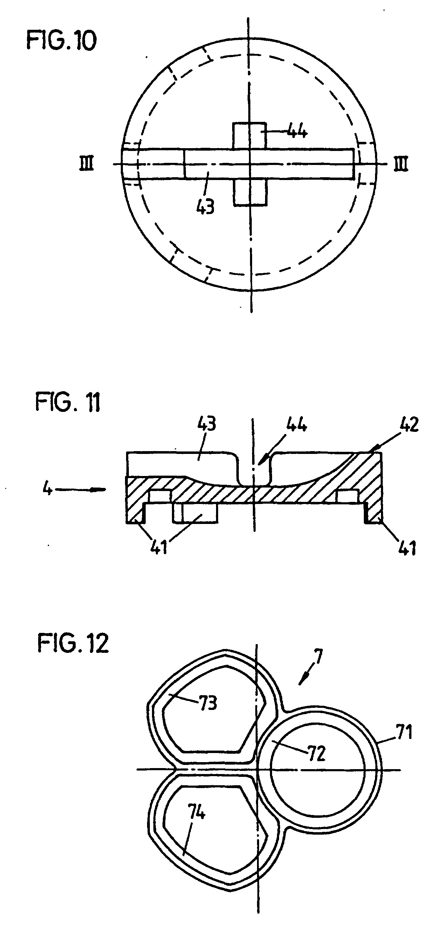

Le joint d'étanchéité 7 venant se loger dans le logement 67 de la plaquette 6 est illustré à la figure 12. Il comporte une armature 71 en matière plastique rigide dont la forme extérieure correspondant à la forme du logement 67 et définissant trois passages. Chacun de ces passages renferme une bague d'étanchéité en matière plastique ou en caoutchouc 72,73,74. L'épaisseur de ces bagues 72,73,74 est plus grande que celle de l'armature 71. Lorsque le joint 7 est en position dans le logement 67, les bagues 72,73,74 entourent les ouvertures 64,65 et 66 de la plaquette 6 et permettent de les séparer de façon étanche.

La hauteur des bagues 72,73,74 est supérieure à la profondeur du logement 67 ainsi lorsque le mécanisme est appliqué à force contre le fond du corps d'une armature sanitaire les bagues d'étanchéité 72,73,74 sont comprimées axialement et permettent de relier de façon étanche les ouvertures 64,65,66 au conduit d'évacuation d'eau mélangée et aux conduits d'arrivée d'eau froide et chaude.

Dans une variante les joints peuvent être réalisés d'une seule pièce et ne pas comporter d'ouverture. En effet, logés dans l'évidement de la plaquette fixe, ils ne risquent pas d'être aspirés par fluage dans l'un des passages de cette plaquette ou dans le conduit d'évacuation d'eau mélangée.

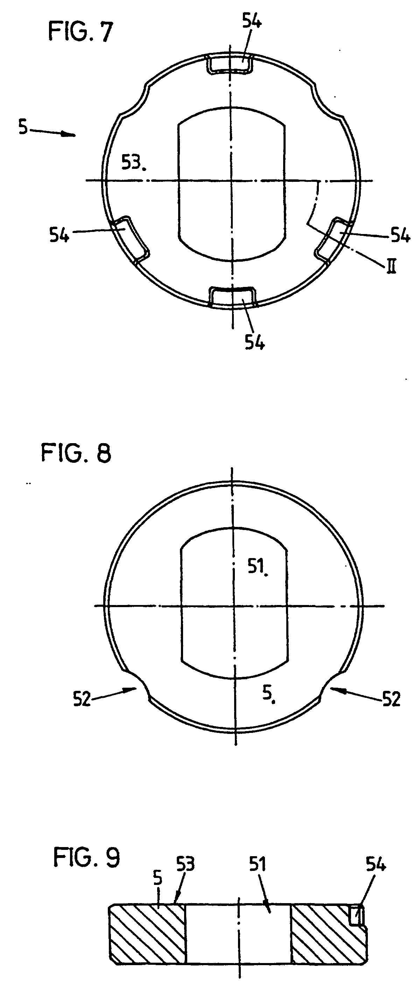

La plaquette mobile 5 supérieure du mécanisme est illustrée aux figures 7 à 9. Elle comporte une ouverture centrale 51 de forme générale rectangulaire permettant de faire communiquer, suivant sa position angulaire et transversale relative par rapport à la plaquette fixe, les ouvertures 64 et 65,66 comme dans un mitigeur conventionnel.

La périphérie de cette plaquette mobile comporte deux évidements 52 donnant passage au pied 12 du boîtier lors de l'introduction de la plaquette mobile 5 dans ce boîtier ce qui évite toute erreur de montage.

La face supérieure 53 de la plaquette mobile 5 comporte à sa périphérie des creusures 54 au nombre de 4 recevant les quatre doigts 41 que l'entraîneur 4 comporte et saillants de sa face inférieure. Ces doigts 41 et ces creusures ne sont pas répartis uniformément autour de l'axe du mécanisme évitant ainsi toute possibilité de montage erronée de la plaquette fixe 5.

L'entraîneur 4 est illustré aux figures 10 et 11. Il comporte les doigts d'entraînement 41 de la plaquette mobile 5 sur sa face inférieure. Son diamètre extérieur est égal à celui de la plaquette mobile 5, tous deux inférieurs à celui de la plaquette fixe 6 qui lui correspond au diamètre interne du boîtier 1. Ainsi, l'entraîneur 4 et la plaquette mobile 5 peuvent se déplacer angulairement et latéralement à l'intérieur du boîtier 1.

La face supérieure 42 de l'entraîneur comporte une première rainure diamétrale 43. D'un côté cette rainure 43 débouche sur la périphérie de l'entraîneur 4 mais de l'autre non. Une seconde rainure 44 s'étendant suivant un diamètre de l'entraîneur perpendiculaire à la rainure 43 constitue une formation d'entraînement en translation de l'entraîneur 4 par le levier 3. La rainure 44 s'étend sur une faible longueur seulement correspondant à l'épaisseur du levier 3.

La rainure 43 elle constitue une formation d'entraînement en rotation de l'entraîneur par l'ensemble formé du guide 2 et du levier 3.

Le guide 2 comporte une partie tubulaire pivotée dans le col 15 du boîtier 1 et des ailettes 21,22 diamétralement opposées, mais d'étendue angulaire différentes. L'ailette 22 s'étend jusqu'à la paroi du boîtier 1 tandis que l'ailette 21 est plus courte et pivote à l'intérieur des bossages 14 que comporte sur une moitié de sa périphérie la paroi interne du boîtier 1. Ainsi, le guide 2 ne peut pas être monté à l'envers dans le boîtier 1.

La face inférieure 24 du guide comporte une nervure 23 coopérant avec la rainure 43 de l'entraîneur et lui servant de guidage dans ses déplacements linéaires et d'entraînement dans ses déplacements angulaires.

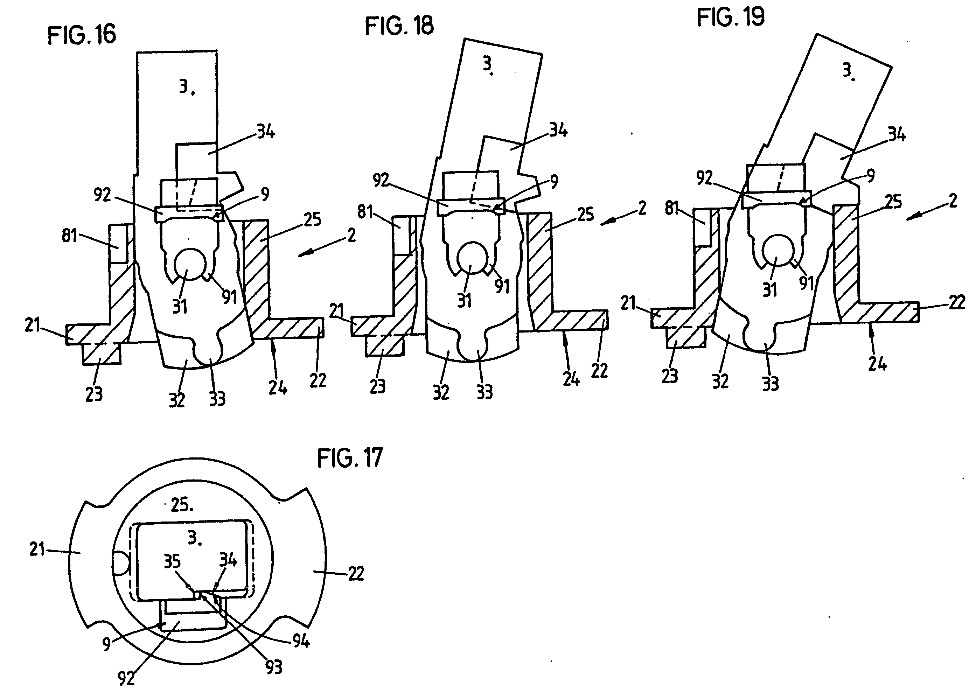

Le levier 3, voir figures 16 à 21, est monté pivotant sur le guide 2 autour d'un axe 31. La course de basculement de ce levier 3 est limitée par son entrée en contact avec la paroi intérieure de la partie tubulaire 25 du guide 2.

L'extrémité inférieure du levier 3 comporte une nervure 32 logée dans la rainure 43 de l'entraîneur 4 et des ergots 33, de part et d'autre de la nervure 32, engagés dans la rainure 44 de l'entraîneur 4.

En basculant autour de son axe 31, le levier entraîne l'entraîneur 4 dans ses déplacements linéaires parallèles à la rainure 43 de celui-ci. Le mouvement permet de régler le débit d'eau du mécanisme en modifiant la section communicante des ouvertures 64 et 65,66 de la plaquette fixe 6.

Par une rotation du levier 3 perpendiculaire à son axe 31, le guide entraîne l'entraîneur 4 en rotation ainsi que la plaquette mobile 5. Ceci provoque une modification de la température de l'eau évacuée en modifiant le rapport des sections des passages 65,66 qui sont en communication avec l'ouverture 64 de la plaquette fixe.

Le levier 3 comporte sur un de ses faces latérales une creusure 34 formant ainsi un cran 35. Le mécanisme comporte encore une butée surpassable amovible de débit constituée ici par un taquet 9 comportant à son extrémité inférieure une pince élastique 91, dans sa partie médiane une collerette 92 et dans sa partie haute une face présentant un arrêt 93 et un plan incliné 94.

Lorsque cette butée est introduite dans un logement 26 du guide 2 sa pince 91 vient s'encliqueter sur l'axe 31 du levier maintenant ainsi la butée en position de service. Dans cette position, le plan incliné 94 de la butée est en appui contre la face latérale du levier 3 comportant la creusure 34.

En position fermée, débit zéro, figures 16,17, le cran 35 du levier n'est pas en contact avec l'arrêt 93 de la butée.

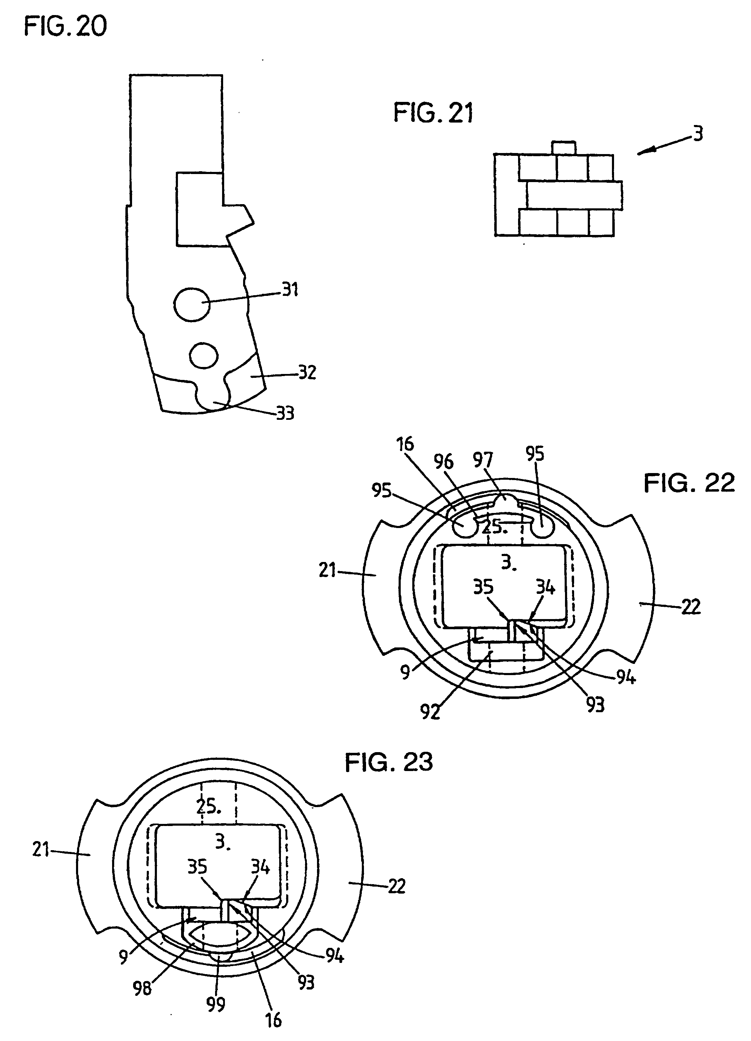

En basculant le levier 3 jusque dans sa position illustrée à la figure 18, le cran 35 vient au contact de l'arrêt 93. L'usager ressent une résistance accrue et arrête le basculement du levier 3. On a ainsi limité le débit d'eau. Si toutefois l'usager nécessite vraiment un débit plus fort, il force le basculement du levier, l'arrêt 93 échappe au cran 35 du levier par déformation élastique et le débit maximum peut être atteint (figure 19).

Cette butée de débit 9 est donc bien surpassable à volonté, mais elle indique néanmoins à l'usager une position pour laquelle le débit est suffisant mais limité. Ce n'est donc que volontairement que l'on augmentera le débit au delà de cette valeur. Cet agencement permet, notamment dans les lieux publics, de réaliser une grande économie d'eau.

De plus, cette butée est amovible et accessible de l'extérieur du mécanisme de sorte qu'elle peut être mise en place ou supprimée sans aucun démontage du mécanisme. Ainsi, le même mécanisme peut être muni ou non d'une butée surpassable de débit simplement en plaçant ou non le taquet 9.

Enfin, le mécanisme décrit est encore muni d'une butée surpassable et amovible de température. Cette butée est constituée d'un tube fendu élastique 8 introduit dans un logement axial 81 pratiqué dans la partie tubulaire 25 du guide 2. Ce logement axial 81 débouche sur la face périphérique de cette partie tubulaire 25 du guide de sorte que le tube élastique 8 fait saillie sur la surface périphérique du guide 2.

La face interne du col 18 du boîtier 1 présente une gorge 16 dont une partie présente une plus grande profondeur que l'autre formant ainsi un seuil 17 entre ces deux parties.

En position froide, le guide 2 est placé de telle façon que le tube fendu 8 soit situé à l'extrémité de la partie profonde de la gorge 16. Au cours du mouvement rotatif du guide 2, augmentant la température de sortie, le tube 8 vient en butée contre le seuil 17 de la gorge 16. L'usager sent donc une résistance plus forte et arrête la rotation du levier limitant ainsi la température de l'eau mélangée. Si toutefois l'usager désire avoir de l'eau plus chaude, il force le déplacement angulaire du guide 2, le tube fendu 8 se déforme et se rétracte dans le logement 81 du guide et la course du guide 2 est augmentée, augmentant la température de l'eau. On a donc réalisé une butée de température surpassable.

En plus, cette butée surpassable est amovible de l'extérieur du mécanisme une fois monté. En effet, il suffit d'enlever le tube fendu 8 et l'on a supprimé la butée de température. Cette opération se fait aisément même une fois le mécanisme en place dans l'armature sanitaire.

Les principaux avantages de ce mécanisme mitigeur pour armature sanitaire sont les suivants :
- Il comporte moins de pièces, puisque le boîtier ne comporte pas de fond.
- Pour une même hauteur du boîtier, l'épaisseur des plaquettes peut être augmentée, ce qui permet de loger le joint d'étanchéité dans la plaquette fixe. Ceci permet d'éviter l'extrusion du joint dans cette plaquette. Ceci permet de prévoir dans une variante un joint en une seule pièce sans armature.
- L'extrémité inférieure du levier des armatures est robuste, elle entraîne l'entraîneur à l'aide de sa nervure longitudinale et de ses ergots, ce qui augmente la résistance de l'entraînement de la plaquette mobile.
- Il comporte une butée de débit amovible et surpassable.
- Il comporte une butée de température amovible et surpassable.
- Le même mécanisme peut être muni ou non de ces butées de débit et de température en mettant ou enlevant simplement un taquet ou une goupille fendue accessible de l'extérieur du mécanisme même une fois monté dans l'armature sanitaire.
- Ces butées surpassables n'ont besoin d'aucun mécanisme pour libérer l'arrêt intermédiaire comme c'est généralement le cas. L'usager peut surpasser ou dépasser l'arrêt intermédiaire simplement en exerçant une poussée plus prononcée sur le levier de commande.
- Le boîtier est en une seule pièce et peut être injecté en matière plastique.
- Toutes les pièces comportent des détrompeurs évitant une erreur de montage. En effet, l'assemblage du mécanisme ne peut être effectué que d'une seule façon, la bonne.
- De plus, l'expérimentation a montré que du fait de l'augmentation d'épaisseur des plaquettes 5,6, notamment de la plaquette fixe 6, les orifices 64,65,66 pouvaient être conformés de manière à linéariser la valeur de la température en fonction de la rotation du levier de commande et à linéariser également la commande de débit en fonction du basculement du levier.
- Enfin, l'expérimentation a également démontré que l'épaisseur augmentée de la plaquette fixe permettait de configurer les ouvertures 64,65,66 de façon simple tout en obtenant de très faibles valeurs du bruit du débit d'eau. Ceci est en effet surprenant car dans les mécanismes actuels, il est nécessaire de prévoir des structures anti-bruit constituées de lamelles, pyramides et autres formes complexes de la surface inférieure de l'entraîneur. Ceci n'est pas nécessaire avec la présente construction car la plus grande épaisseur des plaquettes et notamment de la plaquette fixe réduit la cavitation de l'eau autour des armatures 64,65,66. Les arêtes que forment ces ouvertures avec les surfaces supérieure et inférieure de la plaquette fixe sont vives.

Dans une variante, figure 22, le mécanisme comporte une butée surpassable et amovible de température constituée par un insert présentant deux piliers 95 reliés par un pont 96 déformable élastiquement qui est muni d'un poussoir 97 coopérant avec la gorge 16 du boîtier 1.

Les piliers 95 sont enfilés de façon amovible dans des évidements correspondant que comporte le guide 2.

Il est évident que cet insert, comme le taquet formant la butée de débit comporte une pince déformable élastiquement à son extrémité inférieure permettant l'encliquetage sur l'axe 31 du levier 3.

Dans la seconde variante du mécanisme illustrée à la figure 23, un seul insert constitue simultanément les deux butées. Cet insert se présente sous la forme d'un taquet, comme la butée de débit décrite précédemment, muni d'un pont déformable élastiquement 98 portant un poussoir 99 comme dans la première variante du mécanisme.

## Revendications

1. Mécanisme mitigeur pour armature sanitaire comportant un boîtier (1) renfermant une plaquette céramique fixe (6) munie de trois passages (64,65,66) traversants, une plaquette céramique mobile (5) munie d'une ouverture (51) traversante et coulissant sans jeu et de façon étanche sur la plaquette fixe, un entraîneur (4) solidaire de la plaquette mobile (5) et déplaçable avec celle-ci dans des déplacements angulaires et linéaires par rapport à la plaquette fixe (6), un guide (2) monté rotatif dans le boîtier (1) portant un levier de commande (3) basculant dont une extrémité est en prise avec l'entraîneur (4) pour commander ses déplacements, **caractérisé par le fait que** le boîtier cylindrique (1) est en une seule pièce, ouvert à ses deux extrémités, **par le fait que** sa paroi intérieure comporte à proximité de son extrémité ouverte de plus grand diamètre des formations de guidage et d'encliquetage (11,12,13) coopérant avec des formations correspondantes (61,62,63) de la plaquette fixe (6) permettant l'accouplement par encliquetage de cette plaquette fixe (6) sur le boîtier (1) et donc le maintien en position assemblée de tout l'empilage formé des deux plaquettes (5,6), de l'entraîneur (4) et du guide (2) dans le boîtier (1).

2. Mécanisme selon la revendication 1, **caractérisé par le fait que** la face inférieure (68) libre de la plaquette fixe (6) comporte un évidement (67) au fond duquel débouchent les trois passages (64,65,66) de la plaquette fixe, **par le fait qu'**un joint d'étanchéité (7) est logé dans cet évidement (67) séparant de façon étanche ces trois passages, et **par le fait que** la hauteur de ce joint (7) est supérieure à la profondeur de l'évidement (67).

3. Mécanisme selon la revendication 1, **caractérisé par le fait que** les formations de guidage et d'encliquetage du boîtier (1) sont formées par deux pieds (12) solidaires de la paroi interne du boîtier, s'étendant parallèlement à l'axe de ce boîtier et faisant saillie à l'intérieur du boîtier (1) et au delà de la face frontale inférieure du boîtier (1) définie par le plan de son extrémité ouverte de grand diamètre; **par le fait que** ces pieds (12) ne sont pas diamétralement opposés et qu'ils comportent chacun un cran d'encliquetage (13); **par le fait que** la plaquette fixe comporte des entailles (62) pratiquées dans sa périphérie de forme et position correspondant aux pieds (12) du boîtier (1) et destinées à recevoir ces pieds en position assemblée du mécanisme, la paroi de ces entailles (62) comportant un cran d'encliquetage (63) coopérant avec les crans d'encliquetage (13) des pieds (12) du boîtier (1) pour solidariser par simple encliquetage la plaquette fixe (6) avec le boîtier (1).

4. Mécanisme selon l'une des revendications précédentes, **caractérisé par le fait que** la plaquette fixe (6) comporte sur sa périphérie une saillie (61), située à l'opposé des entailles (62), coopérant avec une découpe (11) de la paroi du boîtier (1).

5. Mécanisme selon l'une des revendications précédentes, **caractérisé par le fait que** le joint d'étanchéité (7) disposé dans la plaquette fixe (6) est d'une seule pièce.

6. Mécanisme selon l'une des revendications 1 à 4, **caractérisé par le fait que** le joint (7) disposé dans la plaquette fixe (6) est formé de trois bagues (72,73,74) montées dans une armature rigide (71).

7. Mécanisme selon l'une des revendications précédentes, **caractérisé par le fait que** la plaquette mobile (5), de plus faible diamètre que la plaquette fixe (6), qui elle comporte un diamètre correspondant à celui du diamètre interne de la partie du boîtier (1) de grand diamètre, comporte deux creusures (52) dans sa paroi périphérique dont la forme et l'emplacement correspondent aux pieds (12) du boîtier (1).

8. Mécanisme selon l'une des revendications précédentes, **caractérisé par le fait que** la face supérieure de l'entraîneur (4) comporte une première rainure diamétrale (43) débouchant d'un côté seulement sur sa périphérie et une seconde rainure (44) disposée suivant un diamètre perpendiculaire de l'entraîneur (4) mais ne s'étendant que sur la partie médiane de ce diamètre.

9. Mécanisme selon l'une des revendications précédentes, **caractérisé par le fait que** la face inférieure (24) des guides (2) est munie d'une nervure (23) s'étendant dans la grande rainure diamétrale (43) de la face supérieure de l'entraîneur (4).

10. Mécanisme selon l'une des revendications précédentes, **caractérisé par le fait que** l'extrémité inférieure du levier (3) comporte une nervure centrale (32) engagée dans la grande rainure diamétrale (43) de l'entraîneur(4) et des ergots latéraux (33) engagés dans la petite rainure (44) perpendiculaire de l'entraîneur (4).

11. Mécanisme selon l'une des revendications précédentes, **caractérisé par le fait qu'**il comporte une butée surpassable et amovible de limitation de débit.

12. Mécanisme selon la revendication 11, **caractérisé par le fait que** cette butée de limitation de débit est constituée d'un taquet (9) engagé dans une fente de la partie cylindrique du guide (2) dont l'extrémité inférieure comporte une pince élastique (91) encliquetable sur l'axe (31) de pivotement du levier (3).

13. Mécanisme selon la revendication 12, **caractérisé par le fait que** ce taquet (9) comporte une face latérale en contact avec une face latérale du levier (3), cette face latérale du taquet (9) comportant un arrêt (93) coopérant avec un cran (35) de la face latérale du levier (3).

14. Mécanisme selon l'une des revendications précédentes, **caractérisé par le fait qu'**il comporte une butée surpassable et amovible de limitation de température.

15. Mécanisme selon la revendication 14, **caractérisé par le fait que** cette butée de limitation de température est constituée par une goupille élastique (8) logée dans un évidement (81) parallèle à l'axe du mécanisme pratiqué dans la partie cylindrique (25) du guide (2), évidement (81) débouchant sur les faces supérieures et périphériques de ce guide; et **par le fait que** la portion de cette goupille élastique (8) émergeant de la surface périphérique de la partie cylindrique (25) du guide (2) s'étend dans une gorge (16) pratiquée dans la surface interne du col (18) du boîtier (1) et dont l'étendue angulaire définit la course angulaire du guide dans le boîtier.

16. Mécanisme selon la revendication 14, **caractérisé par le fait que** cette butée est constituée d'un insert comportant deux piliers (95) engagés dans des évidements du guide (2), ces piliers étant reliés par un pont (96) déformable élastiquement comportant un poussoir (97) émergeant de la surface périphérique de la partie cylindrique (25) du guide (2) et s'étendant dans une gorge (16) pratiquée dans la surface interne du col (18) du boîtier (1) et dont l'étendue angulaire définit la course angulaire du guide dans le boîtier.

17. Mécanisme selon la revendication 14, **caractérisé par le fait que** le taquet (9) de la butée de débit comporte un pont élastique (96) portant un poussoir (97) émergeant de la surface périphérique de la partie cylindrique (25) du guide (2) et s'étendant dans une gorge (16) pratiquée dans la surface interne du col (18) du boîtier (1) et dont l'étendue angulaire définit la course angulaire du guide dans le boîtier.

18. Mécanisme selon la revendication 15, **caractérisé par le fait que** la gorge (16) du col du boîtier (1) dans laquelle s'étend la goupille élastique (8) présente au moins deux profondeurs différentes définissant un seuil (17).

19. Plaquette céramique fixe (6) destinée à recevoir un joint d'étanchéité (7) pour mécanisme mitigeur pour armature sanitaire comportant un boîtier (1) renfermant une plaquette céramique fixe (6) munie de trois passages (64,65,66) traversant, une plaquette céramique mobile (5) munie d'une ouverture (51) traversante et coulissant sans jeu et de façon étanche sur la plaquette fixe, un entraîneur (4) solidaire de la plaquette mobile (5) et déplaçable avec celle-ci dans ses déplacements angulaires et linéaires par rapport à la plaquette fixe (6), un guide (2) monté rotatif dans le boîtier (1) portant un levier de commande (3) basculant dont une extrémité est en prise avec l'entraîneur (4) pour commander ses déplacements, **caractérisé par le fait qu'**elle comprend un évidement unique (67) au fond duquel débouchent les trois passages (64,65,66) de la plaquette fixe (6); **par le fait que** le joint d'étanchéité (7) est logé dans cet évidement (67) séparant de façon étanche ces trois passages et **par le fait que** la hauteur de ce joint est supérieure à la profondeur de l'évidement (67).

20. Plaquette selon la revendication 19, **caractérisée par le fait qu'**elle comporte des formations d'encliquetage (61,62,63) permettant de la solidariser du boîtier (1) par simple encliquetage.

21. Plaquette selon la revendication 19, **caractérisée par le fait qu'**elle comporte sur sa périphérie une saillie (61) située à l'opposé des entailles (62), coopérant avec une découpe (11) de la paroi du boîtier (1).

22. Plaquette selon la revendication 19, **caractérisée par le fait que** l'un des passages (64) traversant est formé par une ouverture circulaire débouchant sur sa face inférieure (68) et dans une creusure tronconique allant en s'évasant en direction de sa face supérieure (69).

23. Plaquette selon la revendication 22, **caractérisée par le fait que** les arêtes des passages en forme de fente (65,66) sur l'une et l'autre face de la plaquette fixe (6) sont des arêtes vives.

## Patentansprüche

1. Mischmechanismus für eine Sanitärarmatur mit einem Gehäuse (1), das ein feststehendes Keramikplättchen (6), das mit drei durchgehenden Kanälen (64, 65, 66) versehen ist, ein bewegliches Keramikplättchen (5), das mit einer durchgehenden Öffnung (51) versehen ist und ohne Spiel dicht auf dem feststehenden Plättchen gleitet, einen Mitnehmer (4), der mit dem beweglichen Plättchen (5) fest verbunden ist und zusammen mit diesem Winkel- und Linearverschiebungen relativ zum feststehenden Plättchen (6) ausführen kann, und ein Führungsglied (2) umschliesst, das drehbar im Gehäuse (1) eingebaut ist und einen kippbaren Steuerhebel (3) trägt, dessen eines Ende sich im Eingriff mit dem Mitnehmer (4) befindet, um dessen Verschiebungen zu steuern, **dadurch gekennzeichnet, dass** das zylindrische Gehäuse (1) aus einem einzigen, an seinen beiden Enden offenen Teil besteht, dadurch, dass seine Innenwand in der Nähe seines offenen Endes grösseren Durchmessers Führungs- und Einrastelemente (11, 12, 13) umfasst, die mit entsprechenden Elementen (61, 62, 63) des feststehenden Plättchens (6) zusammenwirken, durch Einrasten die Ankopplung dieses feststehenden Plättchens (6) am Gehäuse (1) ermöglichen und dadurch den ganzen Stapel, der aus den beiden Plättchen (5, 6), dem Mitnehmer (4) und dem Führungsglied (2) besteht, im Gehäuse (1) in der zusammengefügten Stellung halten.

2. Mechanismus nach Anspruch 1, **dadurch gekennzeichnet, dass** die freie Unterseite (68) des feststehenden Plättchens (6) eine Aussparung (67) umfasst, an deren Boden die drei Kanäle (64, 65, 66) des feststehenden Plättchens münden, dadurch, dass eine Dichtung (7) in dieser Aussparung (67) sitzt und diese drei Kanäle dicht voneinander trennt, und dadurch, dass die Höhe dieser Dichtung (7) grösser als die Tiefe der Aussparung (67) ist.

3. Mechanismus nach Anspruch 1, **dadurch gekennzeichnet, dass** die Führungs- und Einrastelemente des Gehäuses (1) aus zwei Füssen (12) gebildet werden, die fest mit der Gehäuseinnenwand verbunden sind, sich parallel zur Achse dieses Gehäuses erstrecken und im Inneren des Gehäuses (1) sowie über die untere Vorderseite des Gehäuses (1), die durch die Ebene seines offenen Endes grossen Durchmessers definiert ist, hervorstehen; dadurch, dass diese Füsse (12) sich nicht diametral gegenüberstehen und je eine Einrastkerbe (13) umfassen; dadurch, dass das feststehende Plättchen Einschnitte (62) umfasst, die an seinem Umfang eingelassen sind, in ihrer Gestalt und Lage den Füssen (12) des Gehäuses (1) entsprechen und dazu bestimmt sind, in der zusammengefügten Stellung des Mechanismus diese Füsse aufzunehmen, wobei die Wand dieser Einschnitte (62) eine Einrastkerbe (63) umfasst, die mit den Einrastkerben (13) der Füsse (12) des Gehäuses (1) zusammenwirkt, um durch einfaches Einrasten das feststehende Plättchen (6) fest mit dem Gehäuse (1) zu verbinden.

4. Mechanismus nach einem der vorangehenden Ansprüche, **dadurch gekennzeichnet, dass** das feststehende Plättchen (6) auf seinem Umfang einen Vorsprung (61) trägt, der den Einschnitten (62) gegenüber liegt und mit einem Ausschnitt (11) der Wandung des Gehäuses (1) zusammenwirkt.

5. Mechanismus nach einem der vorangehenden Ansprüche, **dadurch gekennzeichnet, dass** die im feststehenden Plättchen (6) angeordnete Dichtung (7) aus einem Teil besteht.

6. Mechanismus nach einem der Ansprüche 1 bis 4, **dadurch gekennzeichnet, dass** die im feststehenden Plättchen (6) angeordnete Dichtung (7) aus drei in einen starren Rahmen (71) eingebauten Ringen (72, 73, 74) gebildet wird.

7. Mechanismus nach einem der vorangehenden Ansprüche, **dadurch gekennzeichnet, dass** das bewegliche Plättchen (5), das einen geringeren Durchmesser als das feststehende Plättchen (6) besitzt, das seinerseits einen Durchmesser aufweist, der dem Innendurchmesser des Abschnitts grossen Durchmessers des Gehäuses (1) entspricht, in seiner peripheren Wandung zwei Aushöhlungen (52) umfasst, deren Gestalt und Lage den Füssen (12) des Gehäuses (1) entspricht.

8. Mechanismus nach einem der vorangehenden Ansprüche, **dadurch gekennzeichnet, dass** die Oberseite des Mitnehmers (4) eine erste diametrale Rille (43), die auf nur einer Seite auf dessen Umfang mündet, sowie eine zweite Rille (44) umfasst, die einem senkrecht zum Mitnehmer (4) verlaufenden Durchmesser folgend angeordnet ist, aber sich nur über den mittleren Abschnitt dieses Durchmessers erstreckt.

9. Mechanismus nach einem der vorangehenden Ansprüche, **dadurch gekennzeichnet, dass** die Unterseite (24) der Führungsglieder (2) mit einer Rippe (23) versehen ist, die sich in die grosse diametrale Rille (43) der Oberseite des Mitnehmers (4) erstreckt.

10. Mechanismus nach einem der vorangehenden Ansprüche, **dadurch gekennzeichnet, dass** das untere Ende des Hebels (3) eine zentrale Rippe (32), die in die grosse diametrale Rille (43) des Mitnehmers (4) eingreift, sowie seitliche Vorsprünge (33) umfasst, die in die kleine, senkrechte Rille (44) des Mitnehmers (4) eingreift.

11. Mechanismus nach einem der vorangehenden Ansprüche, **dadurch gekennzeichnet, dass** er einen überdrehbaren und abnehmbaren Durchflussbegrenzungsanschlag umfasst.

12. Mechanismus nach Anspruch 11, **dadurch gekennzeichnet, dass** dieser Durchflussbegrenzungsanschlag aus einer Knagge (9) besteht, die in einen Schlitz des zylindrischen Abschnitts des Führungsgliedes (2) eingreift und deren unteres Ende eine Federklemme (91) umfasst, die auf der Schwenkachse (31) des Hebels (3) einrasten kann.

13. Mechanismus nach Anspruch 12, **dadurch gekennzeichnet, dass** diese Knagge (9) eine in Berührung mit einer Seitenfläche des Hebels (3) stehende Seitenfläche umfasst, wobei diese Seitenfläche der Knagge (9) eine Sperre (93) umfasst, die mit einer Kerbe (35) in der Seitenfläche des Hebels (3) zusammenwirkt.

14. Mechanismus nach einem der vorangehenden Ansprüche, **dadurch gekennzeichnet, dass** er einen überdrehbaren und abnehmbaren Temperaturbegrenzungsanschlag umfasst.

15. Mechanismus nach Anspruch 14, **dadurch gekennzeichnet, dass** dieser Temperaturbegrenzungsanschlag aus einem federnden Stift (8) besteht, der in einer Aussparung (81) sitzt, die parallel zur Achse des Mechanismus in den zylindrischen Abschnitt (25) des Führungsgliedes (2) eingelassen ist, wobei diese Aussparung (81) auf den Oberseiten und den peripheren Seiten dieses Führungsgliedes mündet; und dadurch, dass der Teil dieses federnden Stiftes (8), der aus der peripheren Oberfläche des zylindrischen Abschnitts (25) des Führungsgliedes (2) hervorsteht, sich in eine Hohlkehle (16) erstreckt, die in die Innenseite des Halses (18) des Gehäuses (1) eingelassen ist und deren Winkelausdehnung die Winkelauslenkung des Führungsgliedes im Gehäuse definiert.

16. Mechanismus nach Anspruch 14, **dadurch gekennzeichnet, dass** dieser Anschlag aus einem Einsatz besteht, der zwei Pfeiler (95) umfasst, die in Aussparungen des Führungsgliedes (2) einrasten, wobei diese Pfeiler durch eine elastisch verformbare Brücke (96) verbunden sind, die einen Drücker (97) umfasst, der aus der peripheren Oberfläche des zylindrischen Abschnitts (25) des Führungsgliedes (2) heraussteht und sich in eine Auskehlung (16) erstreckt, die in die Innenseite des Halses (18) des Gehäuses (1) eingelassen ist und deren Winkelausdehnung die Winkelauslenkung des Führungsgliedes im Gehäuse definiert.

17. Mechanismus nach Anspruch 14, **dadurch gekennzeichnet, dass** die Knagge (9) des Durchflussanschlags eine elastische Brücke (96) umfasst, die einen Drücker (97) trägt, der aus der peripheren Oberfläche des zylindrischen Abschnitts (25) des Führungsgliedes (2) hervorsteht und sich in eine Auskehlung (16) erstreckt, die in die Innenseite des Halses (18) des Gehäuses (1) eingelassen ist und deren Winkelausdehnung die Winkelauslenkung des Führungsgliedes im Gehäuse definiert.

18. Mechanismus nach Anspruch 15, **dadurch gekennzeichnet, dass** die Auskehlung (16) des Halses des Gehäuses (1), in die sich der elastische Stift (8) hineinerstreckt, zumindest zwei verschiedene Tiefen aufweist, durch die eine Schwelle (17) definiert wird.

19. Feststehendes Keramikplättchen (6), dafür bestimmt, eine Dichtung (7) für einen Mischmechanismus für eine Sanitärarmatur aufzunehmen, der ein Gehäuse (1) umfasst, das ein feststehendes Keramikplättchen (6), das mit drei durchgehenden Kanälen (64, 65, 66) versehen ist, ein bewegliches Keramikplättchen (5), das mit einer durchgehenden Öffnung (51) versehen ist und ohne Spiel dicht auf dem feststehenden Plättchen gleitet, einen Mitnehmer (4), der mit dem beweglichen Plättchen (5) fest verbunden ist und zusammen mit diesem Winkel- und Linearverschiebungen relativ zum feststehenden Plättchen (6) ausführen kann, und ein Führungsglied (2) umschliesst, das drehbar im Gehäuse (1) eingebaut ist und einen kippbaren Steuerhebel (3) trägt, dessen eines Ende sich im Eingriff mit dem Mitnehmer (4) befindet, um dessen Verschiebungen zu steuern, **dadurch gekennzeichnet, dass** es eine einzelne Aussparung (67) umfasst, an deren Boden die drei Kanäle (64, 65, 66) des feststehenden Plättchens (6) münden; dadurch, dass die Dichtung (7) in dieser Aussparung (67) sitzt und diese drei Kanäle dicht voneinander trennt, und dadurch, dass die Höhe dieser Dichtung grösser als die Tiefe der Aussparung (67) ist.

20. Plättchen nach Anspruch 19, **dadurch gekennzeichnet, dass** es Einrastelemente (61, 62, 63) umfasst, die es erlauben, es durch einfaches Einrasten fest mit dem Gehäuse (1) zu verbinden.

21. Plättchen nach Anspruch 19, **dadurch gekennzeichnet, dass** es auf seinem Umfang einen Vorsprung (61) trägt, der den Einschnitten (62) gegenüber liegt und mit einem Ausschnitt (11) der Wandung des Gehäuses (1) zusammenwirkt.

22. Plättchen nach Anspruch 19, **dadurch gekennzeichnet, dass** einer der durchgehenden Kanäle (64) durch eine kreisförmige Öffnung gebildet wird, die auf seiner Unterseite (68) und in einer kegelstumpfförmigen Aushöhlung mündet, die sich in Richtung auf seine Oberseite (69) verbreitert.

23. Plättchen nach Anspruch 22, **dadurch gekennzeichnet, dass** die Kanten der schlitzförmigen Kanäle (65, 66) auf den beiden Seiten des feststehenden Plättchens (6) scharfe Kanten sind.

## Claims

1. A mixing mechanism for a plumbing fitting comprising a housing (1) containing a stationary ceramic insert (6) provided with three through passages (64, 65, 66), a moving ceramic insert (5) provided with a through opening (51) and sliding on the fixed insert in leaktight manner and without play, a drive member (4) secured to the moving insert (5) and movable therewith in angular and linear movements relative to the stationary insert (6), a guide (2) rotatably mounted in the housing (1) and carrying a tilting control lever (3) having one end engaged with the drive member (4) to control movements thereof, the mechanism being **characterized by** the fact that the cylindrical housing (1) is a single piece open at both ends, by the fact that its inside wall includes guidance and snap-fastening formations (11, 12, 13) in the proximity of its larger-diameter open end, said formations co-operating with corresponding formations (61, 62, 63) of the stationary insert (6) enabling the stationary insert (6) to be coupled by snap-fastening to the housing (1), and thus enabling the entire stack formed by the two inserts (5, 6), the drive member (4) and the guide (2) to be held in the assembled position inside the housing (1).

2. A mechanism according to claim 1, **characterized by** the fact that the free bottom face (68) of the stationary insert (6) includes a recess (67) into the bottom of which the three passages (64, 65, 66) of the stationary insert open out, by the fact that a sealing gasket (7) is received in the recess (67), thereby separating the three passages in leaktight manner, and by the fact that the height of the gasket (7) is greater the depth of the recess (67).

3. A mechanism according to claim 1, **characterized by** the fact that the guidance and snap-fastening formations of the housing (1) are formed by two prongs (12) secured to the inside wall of the housing, extending parallel to the axis of said housing, and penetrating into the inside of the housing (1) and beyond the bottom front face of the housing (1) as defined by the plane of its large diameter open end; by the fact that the prongs (12) are not diametrically opposite and each of them includes a snap-fastening catch (13); by the fact that the stationary insert includes notches (62) formed in its periphery and of shape and position corresponding to the prongs (12) of the housing (1), for the purpose of receiving said prongs in the assembled position of the mechanism, the wall of each notch (62) including a respective snap-fastening catch (63) for co-operating with the snap-fastening catches (13) of the prongs (12) of the housing (1) in order to secure the stationary insert (6) to the housing (1) merely by snap-fastening.

4. A mechanism according to any preceding claim, **characterized by** the fact that the stationary insert (6) includes a projection (61) on its periphery, situated opposite from the notches (62) and co-operating with a cutout (11) in the wall of the housing (1).

5. A mechanism according to any preceding claim, **characterized by** the fact that the sealing gasket (7) placed in the stationary insert (6) is made as a single piece.

6. A mechanism according to any one of claims 1 to 4, **characterized by** the fact that the gasket (7) placed in the stationary insert (6) is made up of three rings (72, 73, 74) mounted in a rigid frame (71).

7. A mechanism according to any preceding claim, **characterized by** the fact that the moving insert (5), which is of smaller diameter than the stationary insert (6) which is of a diameter corresponding to the inside diameter of the large-diameter portion of the housing (1), includes in its peripheral wall two setbacks (52) of shape and location corresponding to the prongs (12) of the housing (1).

8. A mechanism according to any preceding claim, **characterized by** the fact that the top face of the drive member (4) includes a first diametral groove (43) opening out to one side only of its periphery, and a second groove (44) disposed along a perpendicular diameter of the drive member (4) but occupying only the middle portion of said diameter.

9. A mechanism according to any preceding claim, **characterized by** the fact that the bottom face (24) of the guide (2) is provided with a rib (23) extending in the long diametral groove (43) in the top face of the drive member (4).

10. A mechanism according to any preceding claim, **characterized by** the fact that the bottom end of the lever (3) includes a central rib (32) engaged in the long diametral groove (43) of the drive member (4) and lateral lugs (33) engaged in the perpendicular short groove (44) of the drive member (4).

11. A mechanism according to any preceding claim, **characterized by** the fact that it includes an overridable and removable abutment for limiting flow rate.

12. A mechanism according to claim 11, **characterized by** the fact that said flowrate-limiting abutment is constituted by a stopper piece (9) engaged in a slot of the cylindrical portion of the guide (2) whose bottom end includes a spring clip (91) snap-fastenable on the pivot pin (31) of the lever (3).

13. A mechanism according to claim 12, **characterized by** the fact that the stopper piece (9) has a side face in contact with a side face of the lever (3), said side face of the stopper piece (9) including a stop (93) co-operating with a catch (35) on the side face of the lever (3).

14. A mechanism according to any preceding claim, **characterized by** the fact that it includes an overridable and removable abutment for limiting temperature.

15. A mechanism according to claim 14, **characterized by** the fact that said temperature-limiting abutment is constituted by a resilient peg (8) received in a recess (81) parallel to the axis of the mechanism and formed in the cylindrical portion (25) of the guide (2), the recess (81) opening out in the top and peripheral faces of the guide; and by the fact that the portion of said resilient peg (8) that emerges from the peripheral surface of the cylindrical portion (25) of the guide (2) extends in an indentation (16) formed in the inside surface of the neck (18) of the housing (1) and of angular extent that defines the angular stroke of the guide in the housing.

16. A mechanism according to claim 14, **characterized by** the fact that said abutment is constituted by an insert having two posts (95) engaged in recesses of the guide (2), said posts being interconnected by an elastically deformable bridge (96) including a pusher (97) emerging from the peripheral surface of the cylindrical portion (25) of the guide (2) and extending in an indentation (16) formed in the inside surface of the neck (18) of the housing (1) and of angular extent that defines the angular stroke of the guide in the housing.

17. A mechanism according to claim 14, **characterized by** the fact that the stopper piece (9) constituting a flow rate abutment includes a resilient bridge (96) carrying a stud (97) emerging from the peripheral surface of the cylindrical portion (25) of the guide (2) and extending in an indentation (16) formed in the inside surface of the neck (18) of the housing (1) and of angular extent that defines the angular stroke of the guide in the housing.

18. A mechanism according to claim 15, **characterized by** the fact that the indentation (16) in the neck of the housing (1) into which the resilient peg (8) extends presents at least two different depths defining a threshold (17).

19. A stationary ceramic insert (6) for receiving a sealing gasket (7) for a mixing mechanism for a plumbing fitting comprising a housing (1) containing a stationary ceramic insert (6) provided with three through passages (64, 65, 66), a moving ceramic insert (5) provided with a through opening (51) and sliding on the fixed insert in leaktight manner and without play, a drive member (4) secured to the moving insert (5) and movable therewith in angular and linear movements relative to the stationary insert (6), a guide (2), rotatably mounted in the housing (1) and carrying a tilting control lever (3) having one end engaged with the drive member (4) to control movements thereof, the insert being **characterized by** the fact that it includes a single recess (67) with the three passages (64, 65, 66) of the stationary insert (6) opening out into the bottom thereof; by the fact that the sealing gasket (7) is housed in said recess (67) to separate the three passages from one another in leaktight manner; and by the fact that the height of said gasket is greater than the depth of the recess (67).

20. An insert according to claim 19, **characterized by** the fact that it includes snap-fastening formations (61, 62, 63) enabling it to be secured to the housing (1) merely by snap-fastening.

21. An insert according to claim 19, **characterized by** the fact that it includes a projection (61) on its periphery situated opposite notches (62) and co-operating with a cutout (11) in the wall of the housing (1).

22. An insert according to claim 19, **characterized by** the fact that one of the through passages (64) is formed by a circular opening opening out at its bottom face (68) and into a frustoconical setback flaring towards its top face (69).

23. An insert according to claim 22, **characterized by** the fact that the edges of slot-shaped passages (65, 66) in each of the faces of the stationary insert (6) are sharp edges.
